# EUROPEAN PATENT APPLICATION

(11) **EP 4 471 651 A1**
(43) Date of publication of application: **04.12.2024**
(21) Application number: 24179391.8
(22) Date of filing: 31.05.2024
(51) Int. Cl.: G06F 30/23, H01M 8/04298

(54) **SIMULATION METHODOLOGY FOR FUEL CELL STACKS USING RVE TECHNIQUE**

(30) Priority: 31.05.2023 US 202318326284
(71) Applicant: Dassault Systèmes Americas Corp., Waltham, MA 02451 (US)
(72) Inventor: Pathak, Anand, Pune (IN); Dhavale, Nikhil, Pune (IN); Choi, Jaehwan, Dearborn (US); Kulkarni, Rasika, Pune (IN); Govind, Atharv, Alibag (IN); Jain, Anit, Pune (IN)
(74) Representative: Bandpay & Greuter

(57) **Abstract**

A computer-implemented method automates generation of a representative volume elements (RVE) unit fuel cell model. A finite element model (FEM) of a unit cell of a proton exchange membrane fuel cell (PEMFC) is received. Input identifying a unit region with a discretization of the FE unit cell is received. A mesh rule corresponding to the unit region is received. An RVE unit region corresponding to the FE unit region is generated based on the FE unit region and the mesh rule.

## Description

### FIELD OF THE INVENTION

The present invention relates to fuel cell technology, and more particularly, is related to the design and manufacture of proton exchange membrane fuel cells.

### BACKGROUND OF THE INVENTION

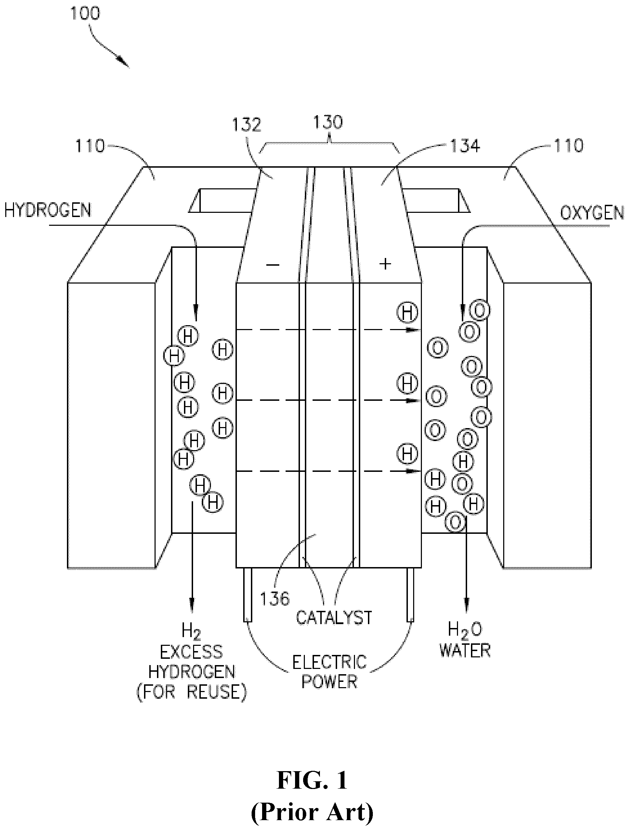

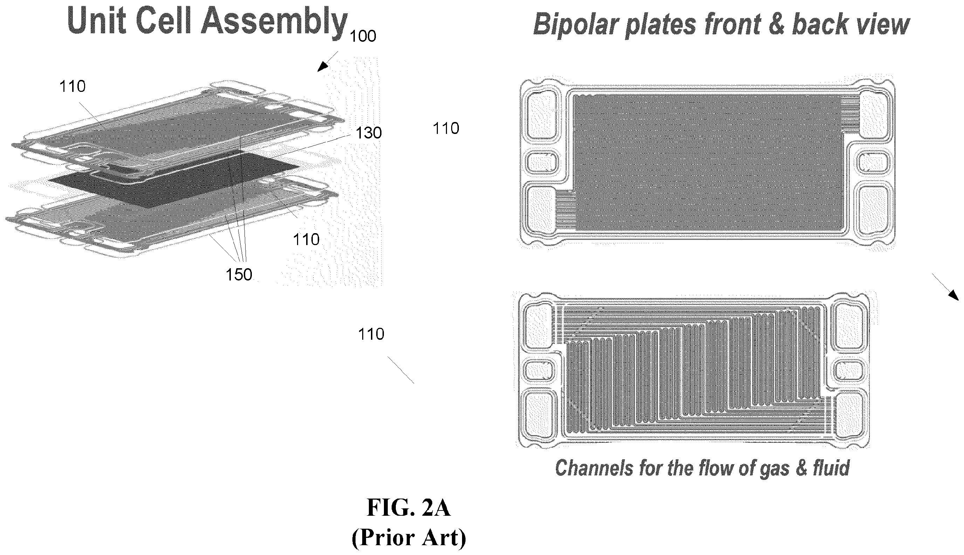

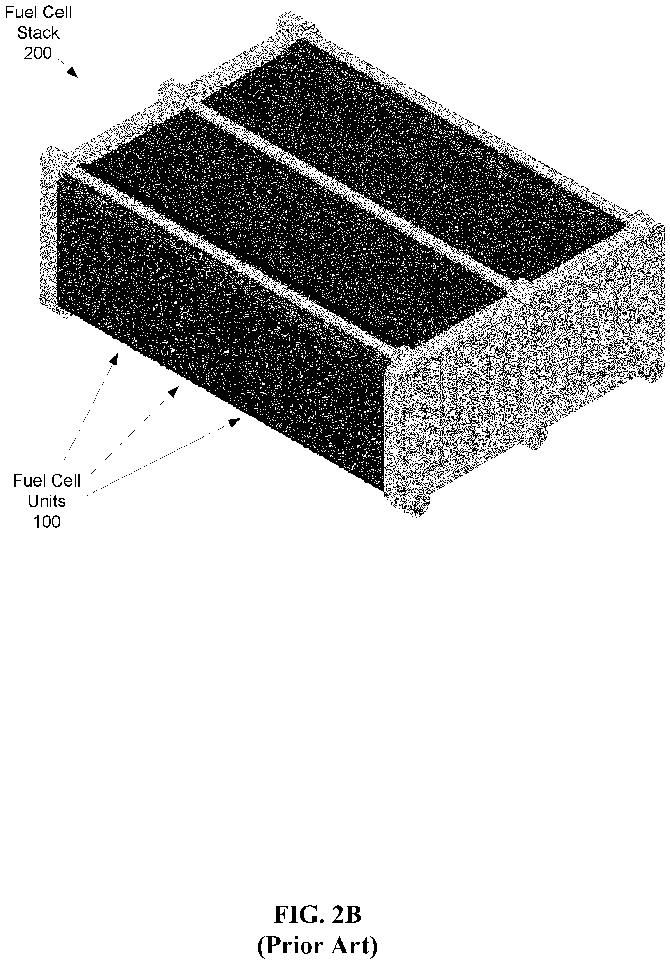

A proton exchange membrane fuel cell (PEMFC) stack 200 is shown in FIG. 2B. The PEMFC stack 200 is formed of a plurality of substantially identical fuel cell units 100 (FIG. 1). As shown by FIG. 1, each fuel cell unit ("unit cell") includes a membrane/electrodes assembly 130 sandwiched between two bipolar plates (BP) 110. A proton exchange membrane 136 of the membrane/electrodes assembly 130 is disposed between an anode 132 and a cathode 134. Hydrogen is provided via a first bipolar plate 110 at the anode 132 and oxygen is provided via a second bipolar plate 110 at the cathode 134. The membrane 136 only allows the positive hydrogen atoms to pass through the membrane/electrodes assembly 130 to combine with oxygen to form water, resulting in a voltage across the anode 132 and cathode 134. The layers of each fuel cell unit 100 may be sealed with gaskets 150 (FIG. 2A) to prevent fluid leakage. The voltage of a single fuel cell unit 100 is relatively small, so stacking a plurality of fuel cell units 100 in a PEMFC stack 200 yields a higher voltage.

As shown in FIG. 2A, the bipolar plates 110 have a grid-like pattern of channels 220 to facilitate the flow of gas and liquid through the unit fuel cell assembly 100.

As noted in the article, "Mechanical simulation of a Proton Exchange Membrane Fuel Cell stack using representative elementary volumes of stamped metallic bipolar plates" (Willy Charon, Marie-Christine Iltchev, Jean-Francois Blachot, International Journal of Hydrogen Energy no. 39 (2014) 12195-13205), knowledge of mechanical stresses are needed for the control of the performance of a fuel cell, and early stage modelling and simulations of the stack architecture lower the costs of the stack and contribute in designing component dimensions and forms. Further, response simulations allows predicting the mechanical stresses that can be analyzed and reworked to compute the electrical performances. However, a detailed finite element (FE) model (FEM) of a fuel cell stack may have as many as multibillion degrees of freedom which becomes impractical to solve computationally. While replacement of some elementary volumes with representative volume elements (RVE) may reduce the number of degrees of freedom (DoF) in a modeled BP, the setup of such a simulation is very time and effort intensive, as are all subsequent iterations to optimize the fuel cell for a given application. Further, the material models developed using RVE methodology have been isotropic, orthotropic, and anisotropic (linearly elastic models). Therefore, there is a need in the industry to address these shortcomings.

### SUMMARY OF THE INVENTION

Embodiments of the present invention provide a simulation methodology for Fuel Cell stacks using RVE. Briefly described, the present invention is directed to a computer-implemented method that automates generation of a representative volume elements (RVE) unit fuel cell model. A finite element model (FEM) of a unit cell of a proton exchange membrane fuel cell (PEMFC) is received. Input identifying a unit region with a discretization of the FE unit cell is received. A mesh rule corresponding to the unit region is received. An RVE unit region corresponding to the FE unit region is generated based on the FE unit region and the mesh rule.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

### BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principles of the invention.
FIG. 1 is a schematic diagram of an exemplary fuel cell unit.
FIG. 2A is an exploded schematic diagram view showing bipolar plates of the fuel cell unit of FIG. 1.
FIG. 2B is a schematic diagram of an exemplary fuel cell stack that incorporates a plurality of fuel cell units of FIG. 1.
FIG. 3 is a schematic diagram showing an exemplary discretization partitioning of a FE unit cell.
FIG. 4 is a schematic diagram showing a user interface of a first plug-in for the first exemplary embodiment of an automation process for producing a unit region RVE.
FIG. 5 is a schematic diagram depicting the input and output of the first portion of the first plug-in of FIG. 4.
FIG. 6 is a schematic diagram depicting the input and output of the second portion of the first plug-in of FIG. 4.
FIG. 7 is a schematic diagram depicting the input and output of the third portion of the first plug-in of FIG. 4.
FIG. 8A is a schematic diagram showing the data structures input to and output from the first step of the first plug-in of FIG. 4.
FIG. 8B is a schematic diagram showing the data structures input to and output from the second step of the first plug-in of FIG. 4.
FIG. 8C is a schematic diagram expanding the "scenario" 840 of FIG. 8B.
FIG. 8D is a schematic diagram of the input and output data flow during usage of the first plug-in of FIG. 4.
FIG. 9 is a schematic diagram showing a user interface of a second plug-in for the second exemplary embodiment of an automation process for producing an RVE unit cell from a plurality of unit region RVEs.
FIG. 10 is a schematic diagram depicting the input and output of the second plug-in of FIG. 11.
FIG. 11 is a flowchart illustrating the processing flow of the first and second embodiments.
FIG. 12 is a schematic diagram illustrating an example of a system for executing functionality of the present invention.
FIG. 13 is a schematic diagram indicating the data sets before the second plug-in is run, after the second plug-in first portion is run, and after the second plug-in third portion is run.
FIG. 14 is a flowchart illustrating the functional flow in an exemplary embodiment of the CAD discretization performed by the second plug-in first portion of FIG. 9.
FIG. 15 is a flowchart illustrating the functional flow in an exemplary embodiment of the CAD discretization performed by the second plug-in second portion of FIG. 9.

The following definitions are useful for interpreting terms applied to features of the embodiments disclosed herein, and are meant only to define elements within the disclosure.

As used within this disclosure, "proton-exchange membrane fuel cells" (PEMFC), also known as polymer electrolyte membrane (PEM) fuel cells, refer to a type of fuel cell typically used for transport applications, as well as for stationary fuel-cell applications and portable fuel-cell applications. They can operate in temperature and/or pressure ranges (50 to 100 °C) and a involve a proton-conducting polymer electrolyte membrane. PEMFCs generate electricity and operate on the opposite principle to PEM electrolysis, which consumes electricity. A PEMFC may be formed of membrane electrode assemblies (MEA) including electrodes, catalyst, and gas diffusion layers (GDL). The cell has a triple phase boundary (TPB) where the electrolyte, catalyst, and reactants mix.

As used within this disclosure, "membrane-electrode Assembly" (MEA), refers to the PEM membrane and the cathode and anode catalyst layers of a PEMFC.

As used within this disclosure, "catalyst layer" (CL) refers to a nanometer scale pore structure of a PEMFC. The CL is added on both sides of the membrane-the anode layer on one side and the cathode layer on the other, immediately surround the PEM.

As used within this disclosure, "bipolar plate" (BP), or flow field plates refer to the exterior layer of a PEMFC to provide flow input and output for gases and water. The BP may be metallic plates that have been stamped to form the fluid channels. The complex and irregular channel patterns present a significant modeling challenge.

As used within this disclosure the "top plate" refers to a first plate of a PEMFC at which translation for uniaxial compression is applied. A corresponding fixed plate is referred to as the bottom plate. When manipulating a unit fuel cell in a CAD environment, the user may add in the description as 'Top' for the 3D part where the user wants to apply the translation. Similarly, the user may add "Bottom" to a description of the respective 3D part. The CAD environment creates a local axis system with z axis being defined as normal to the top plate. The translation is applied to this z axis.

As used within this disclosure, "field output" refers to data that is spatially distributed over the entire fuel cell model or over a portion of the model.

As used within this disclosure, "history output" refers to data at specific points in a fuel cell model, for example, data recorded at the points under different load conditions.

As used within this disclosure, a "Knowledge Engineering Specification" (K.E.S.) refers to a data structure used to specify a physical assembly (real world product). A K.E. S. may include, for example, an engineering template used to duplicate the product. The engineering template may include a plurality of components of the physical assembly, where at least some of the components are represented by FEMs. The engineering template is contained in a resource table for the assembly design. For the K.E. S., a reaction is used to instantiate the engineering template, where the reaction may be triggered by one or more parameters.

As used within this disclosure, "displacement" refers to a distance between two components of an assembly, for example, the separation between a first bipolar plate parallel to a second bipolar plate.

As used within this disclosure, "translation" refers to a change in the displacement between assembly components, for example, measured in mm.

As used within this disclosure, a "unit cell" or "unit cell assembly" refers to a PEMFC sub-assembly consisting of solids with their geometrical shapes and mechanical properties. An exemplary unit cell assembly may include a stack of components forming the active part of the cell:
- the membrane/electrodes assembly (MEA), i.e., the proton exchange membrane and catalysts on anode and on cathode sides
- two gas diffusion layers (GDL), and
- two metallic bipolar plates (BP) sandwiching the MEA/GDL, distributing gas and cooling fluid.

The unit cell may also include sealing joints (gaskets) isolating the active area and the hydrogen, air, and cooling circuits.

As used within this disclosure, a "PEMFC stack" is an assembly formed of a plurality of similar unit cells.

As used within this disclosure, an "FE cell" of "FE unit cell" refers to a finite element model of a unit cell.

As used within this disclosure, an "elementary volume" refers to a repetitive three dimensional portion of a unit cell having a specific shape. An equivalent domain is associated with each elementary volume, for example, a rectangular parallelepiped surrounding the elementary volume.

As used within this disclosure, a representative volume element (RVE) refers to a method of model simplification by replacing elementary volumes of FE cell parts with composite finite elements having homogenized properties. Here, the surface of the unit cell is divided into a plurality of smaller regions ("unit regions"). The unit regions may be of irregular size and shape. Unit regions having an identical geometry and similar properties may be tagged as unit nodes, where some unit regions (elementary volumes) are replaced with RVEs having the same volume. Properties of interest include mechanical properties such as elastic moduli and thermal properties, by may be any averaged quantity that is used to describe physical systems.

As used within this disclosure, an "RVE cell" refers to an FE cell where at least some of the FE cell unit regions have been replaced with RVE unit regions having the same volume.

RVE is a unit material volume element that represents the constitutive response of the corresponding structure. A single fuel cell is discretized into smaller element volumes called unit regions. A particular unit region is comprised of linear elastic, hyperelastic and hyperfoam material. The combined effect of all these materials is of interest to represent the unit region as an elementary volume. Thus, gasket element with gasket thickness behavior (damage type) material model is used to define the unit region to consider the non-linearity in the geometry and material of the different fuel cell components. The pressure versus closure loading curve generated by the uniaxial compression of unit region is used to define gasket thickness behavior.

As used within this disclosure, a "generative wireframe & surface" refers to a method of modeling a physical surface with a plurality of smaller geometric surfaces with edges that resemble a physical wireframe ("surface based model"). Collectively, these smaller geometric surfaces are referred to as a "mesh." The granularity and accuracy of the surface model may be controlled by specifying the shape and size of the mesh elements. "Splitting" involves cutting a surface based model into smaller sections (splits), without losing any frames.

As used within this disclosure, a "split" refers to an operation to cut surfaces or solids, these are typically handled as two separate commands a Computer Aided Three-Dimensional Interactive Application (CATIA). For example, to re-mesh the geometry included within a bounding box, the geometry of the unit fuel cell needs to be split (cut) by the bounding box. For the BP, MEA, Top plate, and Bottom plate, mesh is created on the surface geometry hence surface geometry split operation is used. For GDL, Gaskets mesh is created on solid geometry hence solid geometry split operation is used.

As used within this disclosure, a "reaction" generally refers to a feature enabling a user to create a script specifying how to change one or more feature attributes when an event occurs. For example an events may be any general event on a CAD object such as creation, deletion, update, attribute change and parameter value change.

As used within this disclosure, an "engineering template" refers to a data structure for a (typically) commonly used component. Instantiating an engineering template enables the re-use of pre-existing components to be used for new purposes.

It should be noted that the process of selection of the elementary volumes and the determination of the associated RVE for each is familiar to a person having ordinary skill in the art.

Reference will now be made in detail to embodiments of the present invention, examples of which are illustrated in the accompanying drawings. Wherever possible, the same reference numbers are used in the drawings and the description to refer to the same or like parts.

This disclosure provides exemplary embodiments for Representative Volume Element (RVE) methodologies used to achieve model order reduction for fuel cell assembly. RVE is a unit material volume element that represents the constitutive response of the corresponding structure. A single fuel cell is discretized into smaller element volumes called unit regions. A particular unit region may include linear elastic, hyperelastic and/or hyperfoam material. The combined effect of all these materials is incorporated to represent the unit region as an elementary volume. Thus, for example, a gasket element with gasket thickness behavior (damage type) material model may be used to define the unit region to consider the non-linearity in the geometry and material of the different fuel cell components. The pressure versus closure loading curve generated by the uniaxial compression of unit region may be used to define gasket thickness behavior.

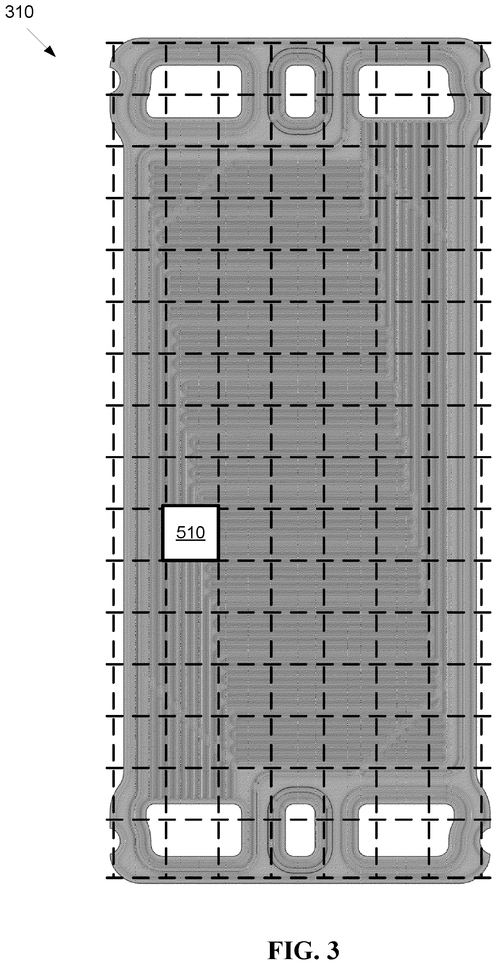

The strategy for simulating the PEMFC for the automation under the first embodiments may be summarized by the following outline:
1. Receive an Initial design of the PEMFC.
2. Preparation of an FE unit cell of the PEMFC. This includes an analysis of the unit cell to be leveraged by the simulation, including the geometric features of the bipolar plates, for example, identifying repeated features and regions of symmetry.
3. RVE generation. This includes discretization of the FE unit cell (partitioning the FE unit cell into a plurality of unit regions), identifying repeated unit regions, modeling each repeated unit region, performing simulations of each unit region. An exemplary discretization strategy shown by FIG. 3 includes selecting rectangular pattern of a unit cell FEM 310 to create a surface geometry. It should be noted that for demonstration purposes only FIG. 3 shows uniformly sized unit regions 510 that do not correspond to the geometry of the unit cell FEM 310. The behavior of the gaskets may also be addressed (for example, creating a gasket as a volume element that is preloaded as an initial condition).
4. Global Model (with RVE). This includes creating a global model (with gasket behavior) in the presence of a clamping force, and recording simulation results of the global model.
5. Submodel. Here, a submodel is the local part of a full model, in this case a detailed FE model (similar to unit regions) with a refined mesh. The submodel is driven by the interpolation of a solution from an initial global RVE model.

It should be noted that a more detailed description of this simulation may be found in the Charon reference.

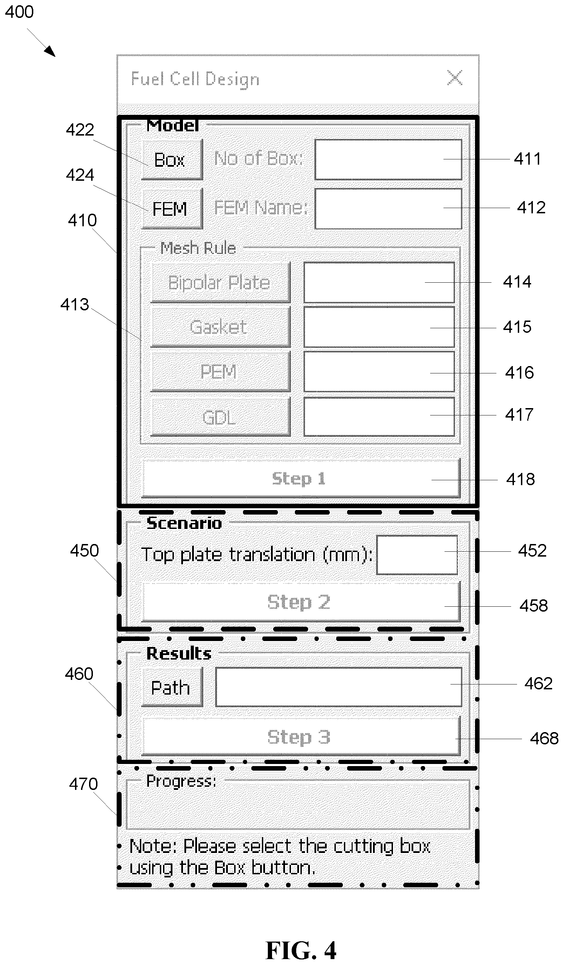

Under a first exemplary embodiment, a first application ("first plug-in"), accepts parameters with regard to a section of a FE unit cell to automatically produce a corresponding RVE unit region. FIG. 4 shows a first exemplary embodiment of a graphical user interface (GUI) for the first plug-in 400. The interface includes a first unit portion 410 (corresponding to a first step) for receiving user input regarding a selected unit region ("box") 510, a second portion 450 (corresponding to a second step) for receiving user input regarding a model scenario, a third portion 460 (corresponding to a third step) to receive a path for an RVE generated by the plug-in as output, and a fourth portion 470 displaying a progress status indicator.

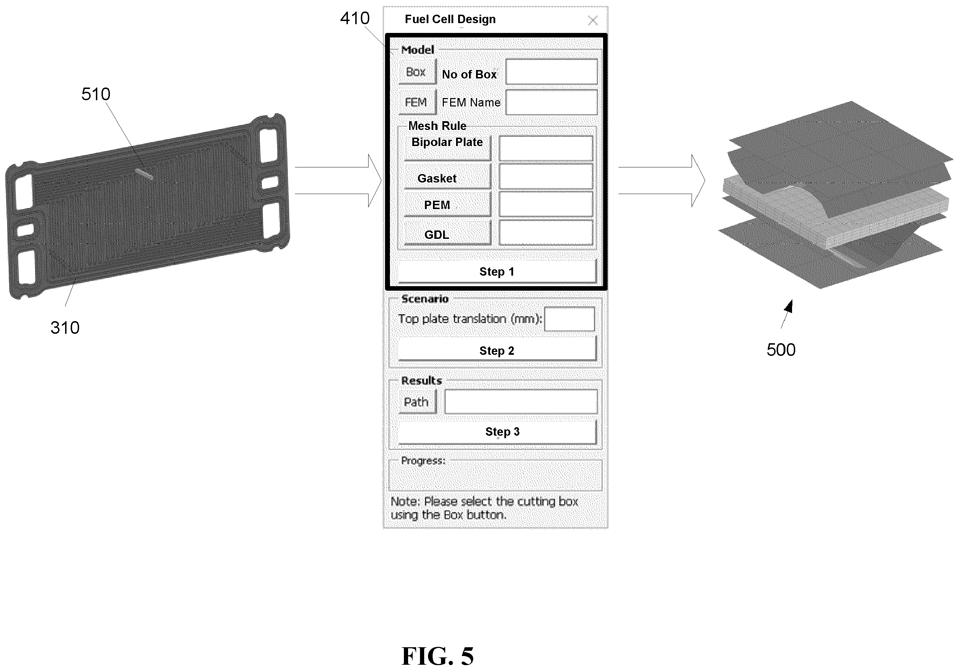

The first portion 410 is used for the first step of unit region model cutting and unit region mesh connection creation. FIG. 5 depicts a representation of the input and output for population of the first portion 410 of the first plug-in user interface 400. The user selects a unit region 510 from the unit cell FEM 310. For example, by clicking on box 422, a host CAD program may graphically display a plurality of unit regions of the unit cell FEM 310 to the user. The user may select the unit region 510 in a graphical representation of the unit cell FEM 310 by a host CAD program, for example, by clicking (for example, with a mouse or a track pad) on a specific unit region of the unit cell FEM 310, such that the plug-in receives the selection. The "no of box" field 411 displays a number of selected unit regions 510 in a unit region ("box") identifier field 411, and displays a corresponding FEM identifier for the unit cell FEM 310 in an FEM identifier field 412 of the first portion 410. In an alternative embodiment, the user may select the unit region by entering the box number into the box identifier field 411 and the FEM identifier into the FEM identifier field 412.

The user may then use the unit region mesh rule box 413 to specify rules for different portions of the identified unit region, in this example, unit region mesh rules for the bipolar plate 414, the gasket 415, the proton exchange membrane (PEM) 416, and the gas diffusion layer (GDL) 417.

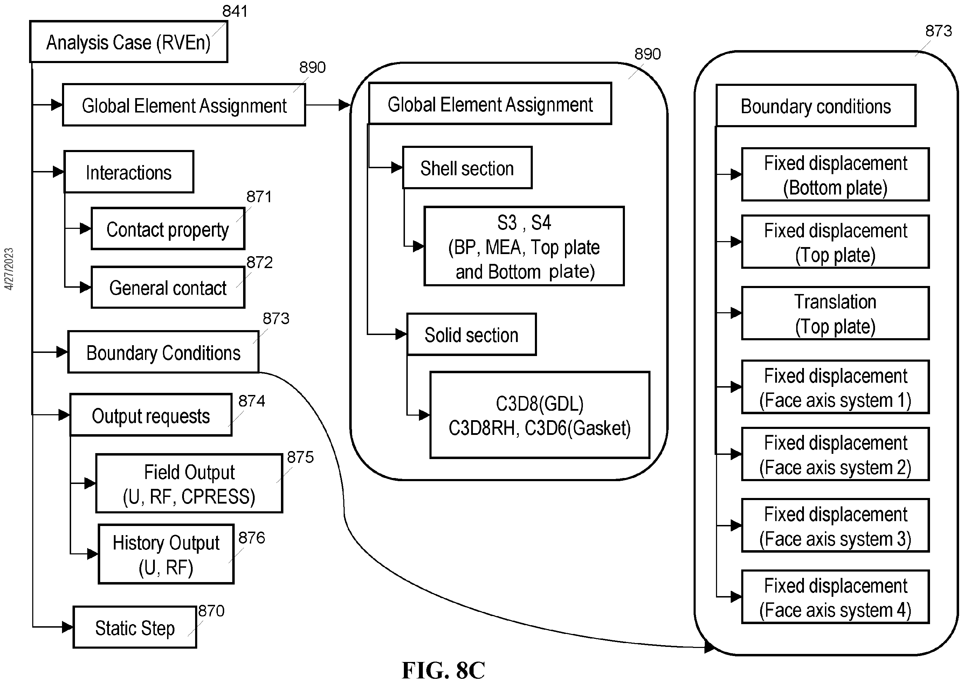

Here, the user assigns elements 890 to the unit region mesh depending upon the components of the unit region, for example, as shown by Table 1, referencing FIG. 8C:

**Table 1**

| **Component** | **Element** | **Description** |
|---|---|---|
| BP Mesh | S3 | 3-node triangular shell element |
| PEM Mesh | S4 | 4-node triangular shell element |
| GDL Mesh | C3D8 | 8-node linear brick element |
| Gasket | C3D6H | 6-node linear triangular prism, hybrid with constant pressure |
| Top plate, bottom plate | C3D8RH | 8-node linear brick element, hybrid with constant pressure |

Alternative embodiments may use other element types as well.

The FEM box 424 is used for validating whether FEM representation of the unit cell is duplicated in the unit region model. In some cases, the duplication may fail. In such failure scenarios, where duplication of FEM representation has not been achieved in the unit region, then the plug-in does not execute the steps further, and instead displays an error message, for example, "The FEM the user has chosen is absent from the product."

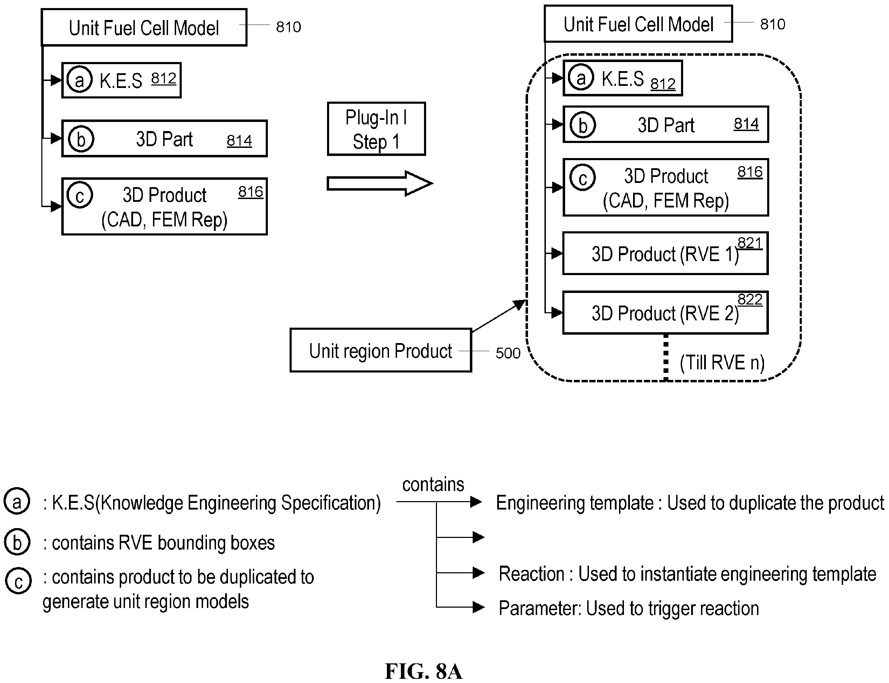

To complete the first step, when triggered by the user, for example via a "step 1" button 418, the first plug-in uses the received fields to generate the unit region model 500, as described further below. FIG. 8A is a schematic diagram showing the input and output of the first step of the first plug-in 400. The input to the first step is a unit fuel cell model 810, which may include, for example, a K.E.S. 812, a 3D part 814 containing RVE bounding boxes, and/or a 3D product 816 (containing the unit cell FEM) to be duplicated to generate unit region models. The 3D product may be, for example, a CAD representation of the product, or an FEM representation.

Upon execution, the first plug-in first step produces a first RVE 821. The first step may be executed a second of time, the second execution receiving a definition of a second unit region 822 of the unit fuel cell FEM 810, and producing a corresponding second RVE 822. The first plug-in 400 may be run a plurality of n times, once for each of n unit volumes, resulting a plurality of n RVEs 821, 822,..., 82n.

Once the first plug-in 400 has generated a unit region model 500 in the first step, the second step (corresponding to the second portion 450) receives user input regarding a model scenario 840 that defines forces that may act upon the unit region model.

The objective of the second step scenario 450 is to set up a uniaxial compression simulation load-case which, upon execution, generates force vs. displacement data. The force vs. displacement data is further converted to pressure-closure data in the third step 460, as described further below.

For example, the user may enter a top plate translation value (for example, a distance in mm) into a top plate translation field 452 (FIG. 4). This translation value is used to describe the scenario 840, where the plug-in passes the translation value to an application, for example, a `Mechanical Scenario App' to determine the dynamics of the unit region in the presence of external forces. The first plug-in second step 450 applies data for the scenario 840 to the unit region model 500 to produce a unit region scenario 600.

When the user clicks the step 2 button 458, the user interface script calls an application to execute the second step producing the unit region scenario 610, for example, the Dassault Systemes 3DS Mechanical Scenario Creation application provides the tools to define and perform any type of simulation on a mechanical model, including analyses that incorporate instant or dynamic loading events. Here, the script passes the application the data entered by the user as well as the step one results.

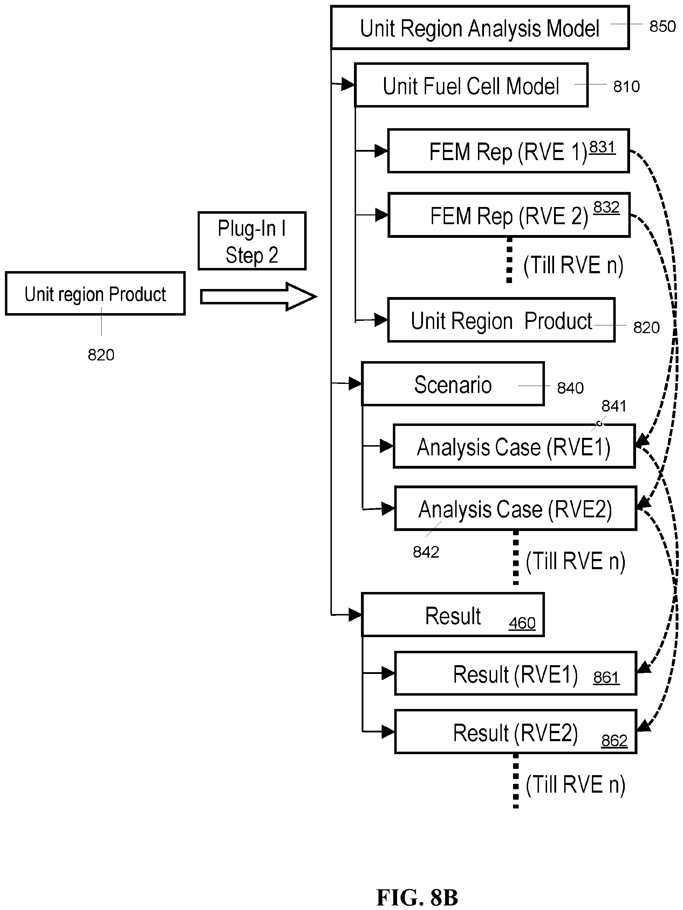

FIG. 8B illustrates the output of the first plug-in 400 second step 450, where a scenario 840 is applied to the plurality of RVEs 831, 832,...,83n. Each scenario 840 may correspond to a specific analysis case 841, 842,...,84n for a corresponding RVEs 831, 832,...,83n. The user may use the specific analysis case 841, 842 to determine corresponding results RVE 861, 862, ... , 86n that incorporate the respective scenario specific analysis case 841, 842,...,84n.

FIG. 8C provides additional detail to the scenario processing of FIG. 8B. A static step 87 may be defined for the load-case, where the static step performs a stress analysis of a stable problem in which inertia effects are neglected. Here, the interaction 871, 872 between the unit region components is assumed to be `general contact' 872 with contact property defining the coefficient of friction. The top plate is translated in the thickness direction of the unit region by value manually entered by the user in the second step 450. The bottom plate is fixed and has no translations and rotations in all 3 axes. The boundary nodes of the unit region may be assigned symmetric boundary conditions 873. Output requests 874 may include field output 875 of displacement U, reaction force RF and contact pressure CPRESS; history output 876 of displacement and reaction force at the reference point of the top plate rigid body in the translation direction has been requested by the script. This entire simulation scenario setup is generated when the user clicks on Step 2 button 458, and the scenario is then executed for further post-processing.

The first plug-in third portion 460 is used for extraction and processing results of simulations run on the RVE unit regions under the scenarios entered by the user in the first plug-in second step 450. The third portion 460 receives a path from the user as input that the plug-in uses as the destination for Unit Region Pressure-Closure Data 720 results,

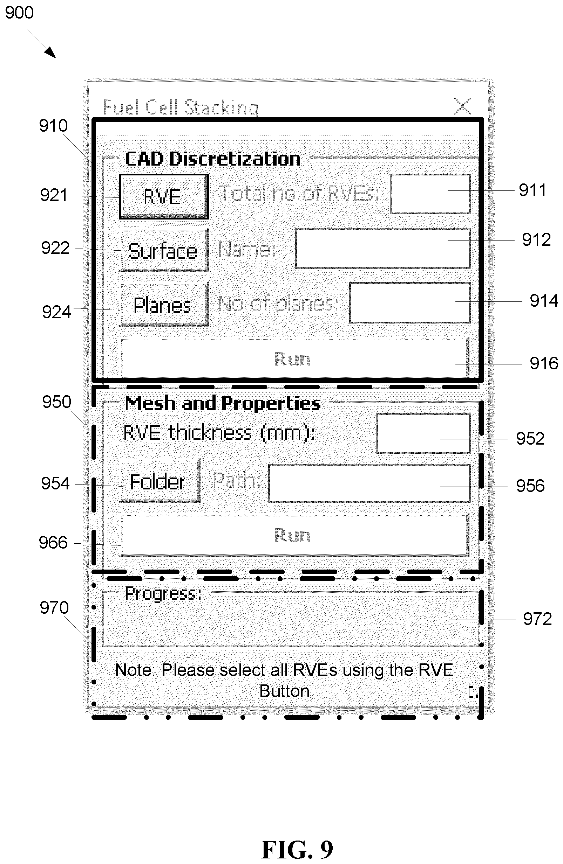

While the first embodiment produces Unit Region Pressure-Closure Data 720, in an alternative embodiment the first plug-in 400 may provide the data received via the plug-in interface and/or additional data/parameters regarding the RVE unit regions to external modules to simulate additional scenarios producing additional data sets as output of the first plug-in 400. Such additional output may be provided as input to the second plug-in 900 (FIG. 9, described below).

For every unit region analysis 841, 842,...,84n, field output 875 of displacement, reaction force and contact pressure are incorporated from the results of the second step 450.

Similarly for every unit region history 876 output of displacement, reaction force is requested at the rigid body 'top plate' are incorporated from the results of the second step 450. The history output plot in the form of x-y data is used to extract pressure closure data points for the particular unit region.. For example, the first plug-in provide the Unit Pressure-Closure Data 720 results and/or other derived or received data (e.g., displacement scenarios) to an external module to determine a set of material properties appropriate for components a real-world fuel cell.

After the simulation execution for the unit region, the third step 460 exports the history plot 710 of reaction force vs displacement into a database file (for example, an .xsls file). The reaction force data is divided by area of `top plate' to get the pressure data with respect to the closure (displacement) data.

The first plug-in fourth portion 470 may display a graphical progress indicator.

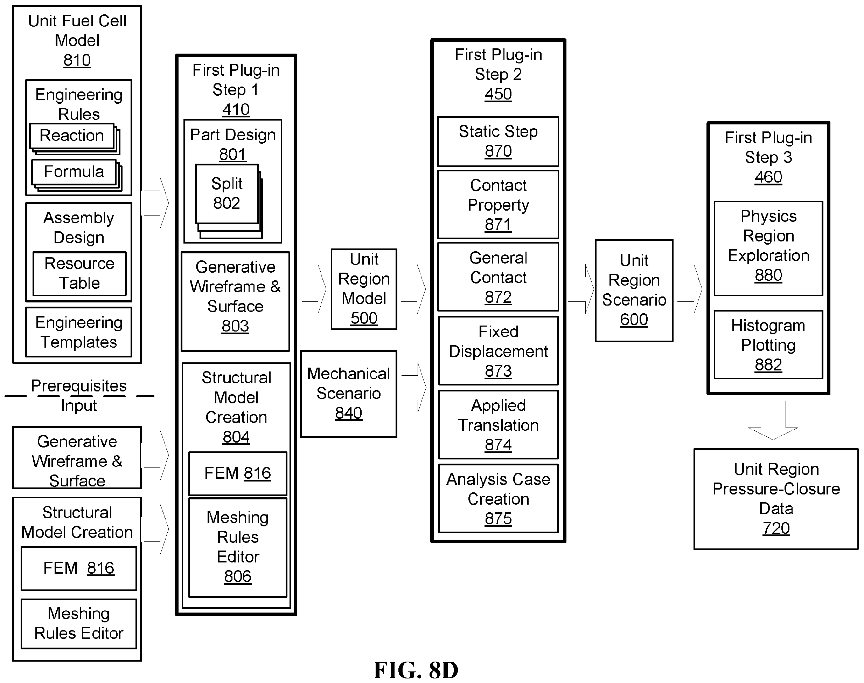

FIG. 8D depicts the inputs and outputs of each of three steps performed by the first plug-in 400. The inputs to the first plug-in first step 410 include both prerequisite information (above the dashed line), and additional inputs (below the dashed line), including user parameters input into the plug-in text boxes 411-412 and 414-417 (FIG. 4). It should be noted that the specific input mechanisms and fields may be different in alternative embodiments. Prerequisite data is generally regarding the unit fuel cell model 810, for example, engineering rules (e.g., reactions and formulas), assembly design, and engineering templates, amongst other examples. The prerequisite data may be gathered by the host CAD environment via an Engineering Rules Capture app used to embed knowledge in design such as formulas, rules and checks and leverage it to assist in engineering decisions, reduce errors or automate the design. Likewise, Engineering Templates app assist in efficiently creating the operations that duplicate and reference database components (such as products, simulations, or parts).

The input data includes data regarding generative wireframe and surface parameters, and structural model creation 804. Structural model creation 804 may be facilitated by an application native to the CAD environment for adding and editing model features that impact the structural response of a simulation, for example, including the FEM 816 and a unit region meshing rules editor 806.

The first plug-in first step 410 uses the prerequisites and input to discretize the FEM 816 into parts (unit regions), for example, including a plurality of splits 802. As described above, the first plug-in 400 creates a unit region RVE model 500 based on the user defined unit region and the unit region mesh rule parameters 414-417 received via the plug-in graphical user interface (GUI) shown in FIG. 4. The user may trigger the generation of the RVE model 500 via the first plug-in GUI, for example, by selecting the step 1 button 418 after manually populating the appropriate fields 411-412, 414-417.

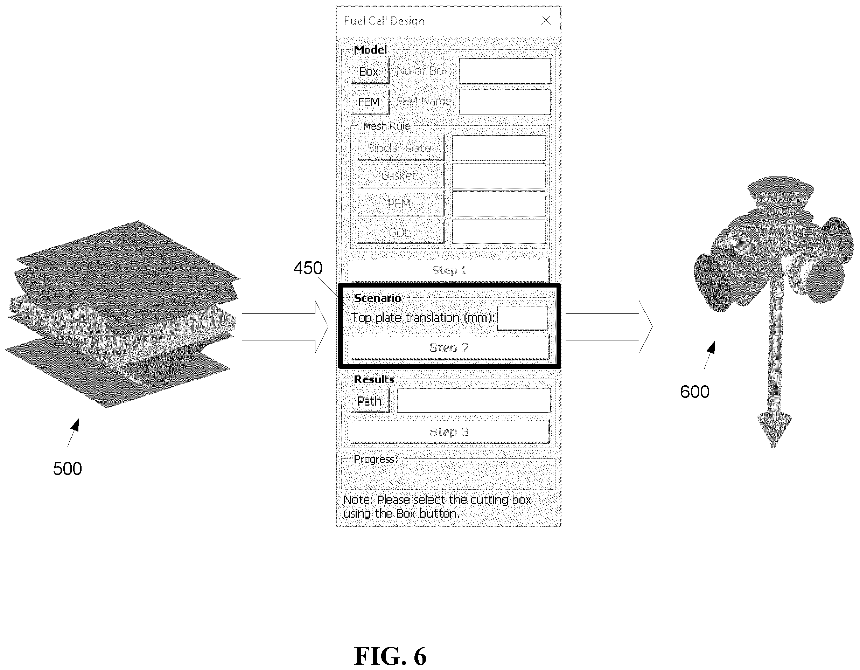

As shown by FIG. 6, the first plug-in second step 450 uses the RVE unit model 500 created by the first plug-in first step 410 to create a unit region mesh and create a uniaxial compression analysis case. The first plug-in second step 450 receives a mechanical scenario 840 via the first plug-in GUI, for example, a top plate translation 452 (FIG. 4). The user may trigger the generation of the unit region scenario 600 via the first plug-in GUI, for example, by selecting the step 2 button 458 (FIG. 4). Here, the first plug-in second step invokes a Mechanical Scenario Creation application, or similar existing utility to provide appropriate tools for defining and performing simulations on the unit region model 500, including analyses that incorporate instant or dynamic loading events.

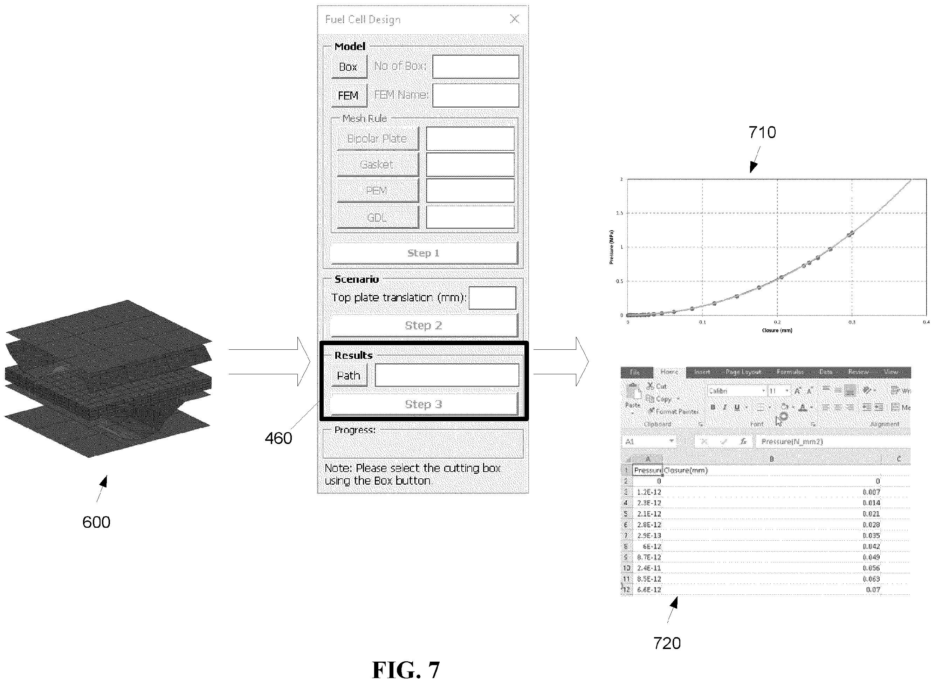

As shown by FIG. 7, the first plug-in third step 460 uses the unit region scenario 600 created by the first plug-in first second 450. The first plug-in third step 460 receives a file path input by the user (for example, via the path textbox 462 (FIG. 5), and invokes an application, for example, Physics Results Explorer, a native app that accepts the unit region scenario 600 and creates a graphical outputs, and/or animations of the model response. For example, the output of the first plug-in third step may be a graph 710 plotting pressure against the closure (distance between bipolar plates) in the unit region scenario 600.

As described above, the first plug-in 400 may be used to automate the creation of a plurality of RVE unit regions, where the RVE unit regions effectively replace the FE unit regions in the model. The output of the first plug-in 400 is the pressure closure data that is generated for all the unit regions. Under a second exemplary embodiment, the pressure closure data is input to a second plug-in 800 for producing an RVE unit cell.

As shown by FIG. 9, Under the second exemplary embodiment, a second application ("second plug-in") 900, accepts parameters with regard to RVE units for a FE unit cell to automatically produce a corresponding RVE unit cell. FIG. 9 shows a second exemplary embodiment of a user interface for the second plug-in 900.

The interface includes a first portion 910 (corresponding to a first step) for receiving user input regarding CAD Discretization, a second portion 950 for receiving user input regarding RVE unit cell mesh and properties, and a third portion 970 displaying a progress status indicator.

The first portion (CAD discretization) 910 deals with the geometry preparation to generate RVE unit cell model. The inputs to the section are the bounding boxes generated in the discretization step (as per the first portion 410 and second portion 450 of the first plug-in 400, described above), the mid-surface of the fuel cell and, optionally, the planes of symmetry. The second plug-in 900 cuts the input mid-surface into smaller surfaces, areas enclosed within the bounding boxes. If the user has given the input for planes of symmetry, these splits are used to create symmetrical surfaces about the planes. For example, a model may have quarter symmetry, so the splits are generated for quarter region of the surface while the splits of the remaining three quarters are generated by the symmetry operation. Thus, the user saves the time of creating bounding boxes for the entire geometry. These splits (and symmetrical surfaces, if present) act as a geometric support to generate surface mesh for the RVE elements.

The second plug-in first portion 910 is used for selection of the RVE unit regions to be incorporated into the FE unit cell to produce the RVE unit cell ("RVE model"). The second plug-in second portion 950 is used for defining the RVE unit cell mesh and properties for the RVE unit regions to be incorporated into the RVE unit cell. The second plug-in 900 receives a wireframe surface as input, for example, from a generative wireframe and surface application, data produced by the first plug-in 400, for example the RVE unit models and pressure (Mpa) vs. Closure (data). The second plug-in 900 also receives parameters manually entered by the user via the GUI of the second plug-in.

The first portion 910 of the second plug-in user interface includes the following controls. The RVE button 921 allows the user selection of all the bounding boxes (repetitive and unique) created in the discretization step (as per the first portion 410 and second portion 450 of the first plug-in 400, described above). The "Total no of RVEs" field 911 displays the total number of user selected bounding boxes.

The Surface button 922 allows the user selection of a surface that is at the mid level of the unit fuel cell thickness, the bounding boxes split this surface into smaller surfaces which are used to create an RVE surface mesh. The "Name" field 912 displays the name of the selected mid-level surface.

The planes button 924 button allows the user to select the planes of symmetry if there are any (the user can skip this button if there are no planes of symmetry). The "no of planes" field 914 displays the number of planes of symmetry selected by the user. The first portion run button 916 causes the second plug-in to generate splits for the selected surface. If the user has provided planes of symmetry, the symmetrical surfaces of the splits are created.

The second portion (mesh and properties) 950 receives as input the RVE element thickness value and the path of the folder containing the pressure-closure data generated by the first plug-in. A FEM rep is inserted in the RVE unit cell model. The splits (and symmetrical surfaces if present) are used to create two dimensional surface meshes, and these 2D surface meshes are extruded in the normal direction on both sides by thickness/2 value. A gasket section property is created for all the 3D meshes. The pressure closure data 720 generated by the first plug-in is used for a gasket thickness behavior (damage type) model by inserting the pressure closure data 720 in the loading curve section of the material definition. This material is then assigned to the gasket property.

The second portion 950 of the second plug-in user interface includes the following controls. The user may key-in thickness (in mm) of the RVE element into "RVE thickness (mm)" field 952. The RVE surface meshes are extruded by 'thickness'/2 on both the sides of the surface in a direction normal to the surface mesh. The folder button 954 allows the user to select a folder in which the output (database, for example Excel) files of pressure closure data of the unit regions are saved. The "path" field 956 displays the selected folder path. Clicking the second portion run button 966 causes the second plug-in to generate the RVE surface meshes using the splits and symmetry (the output of the process of the first portion run button 916). These meshes may then be extruded to form RVE 3D elements. The pressure closure data from the database files is used to create gasket behavior material, and this material is used while defining gasket property for all the RVE elements. The third portion progress bar 970 displays the completion status after selecting either run button 916, 966.

The second plug-in converts the unit fuel cell model into an RVE unit cell model. The second plug-in 900 creates RVE elements by splitting the mid-surface of the fuel cell, generating symmetry surfaces (if any symmetry is present in the fuel cell), creating RVE gasket thickness behavior material, and assigning the sections to the respective RVE elements.

This RVE unit cell model provides mesh, material, and section assignments for RVE unit cell only. A Material Definition app is used to define materials, apply materials to objects. By using the proper boundary conditions and loading circumstances (minimum required boundary conditions to set up a scenario that differs from case to case), the compression of the entire fuel cell model is simulated.

In order to produce an assembly pattern with 'n' fuel cell stacks, the second plug-in generates an RVE unit cell mesh. This RVE unit cell model may then be used to manually create fuel cell stack to carry out further assembly load case simulation. The actions of creating assembly pattern to generate fuel cell stack and the scenario setup for the fuel cell stack is manual. This assembly pattern now reflects the full fuel cell stack. In order to produce an assembly pattern with 'n' fuel cell stacks, the second plug-in generates an RVE unit cell mesh.

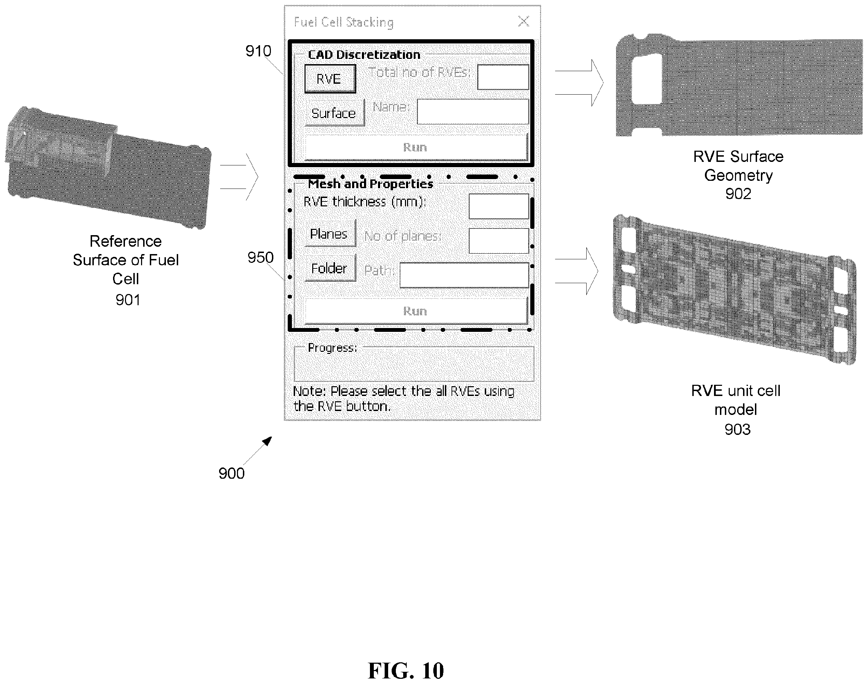

FIG. 10 depicts a graphical representation of the inputs and output for population of the second plug-in user interface 900.

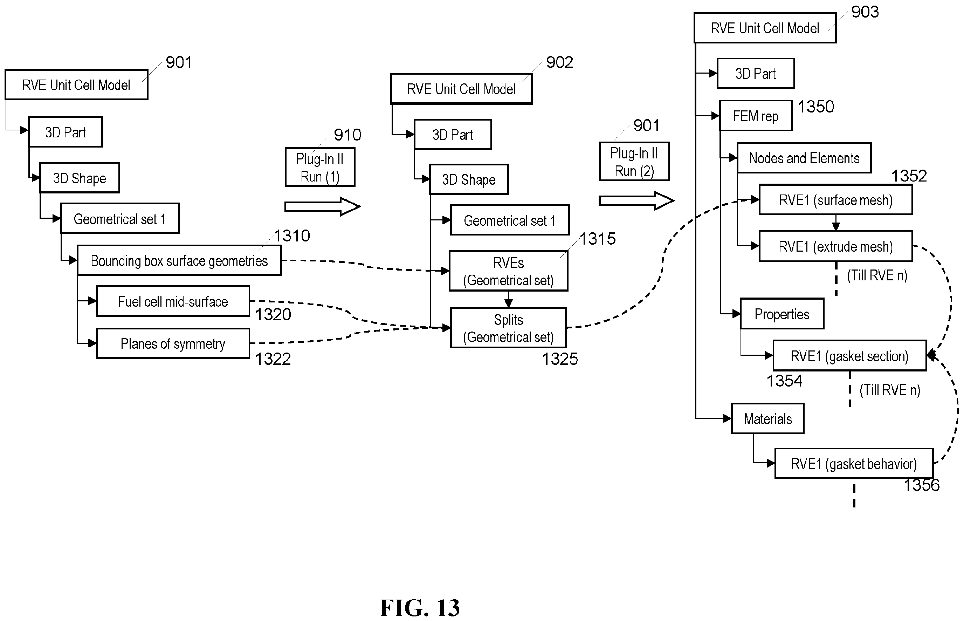

FIG. 13 is s schematic diagram indicating the data sets 901 before the second plug-in 900 is run (left), the data sets 902 after the second plug-in first portion 910 is run (center), and the data sets 903 after the second plug-in second portion 950 is run (right). In particular, the second plug-in first portion 910 receives RVE unit region bounding box surface geometries 1310 and produces corresponding RVE geometrical sets 1315. Here, a "geometrical set" refers to a container that stores surface and wireframe geometries, and an RVE geometrical set refers to a geometrical set generated by second plug-in 900 to store the disassembled patterns of a repetitive bounding box or a unique bounding box.

The second plug-in first portion 910 receives data regarding fuel cell mid-surfaces 1320 and planes of symmetry 1322, and produces a geometrical splits set 1325 (a geometrical set that stores the splits and the symmetry of the splits). The second plug-in second portion 950 uses the geometrical splits set 1325 to produce an FEM representation of a unit cell 1350 with corresponding RVE surface meshes 1352, and RVE gasket sections 1354 and materials 1356.

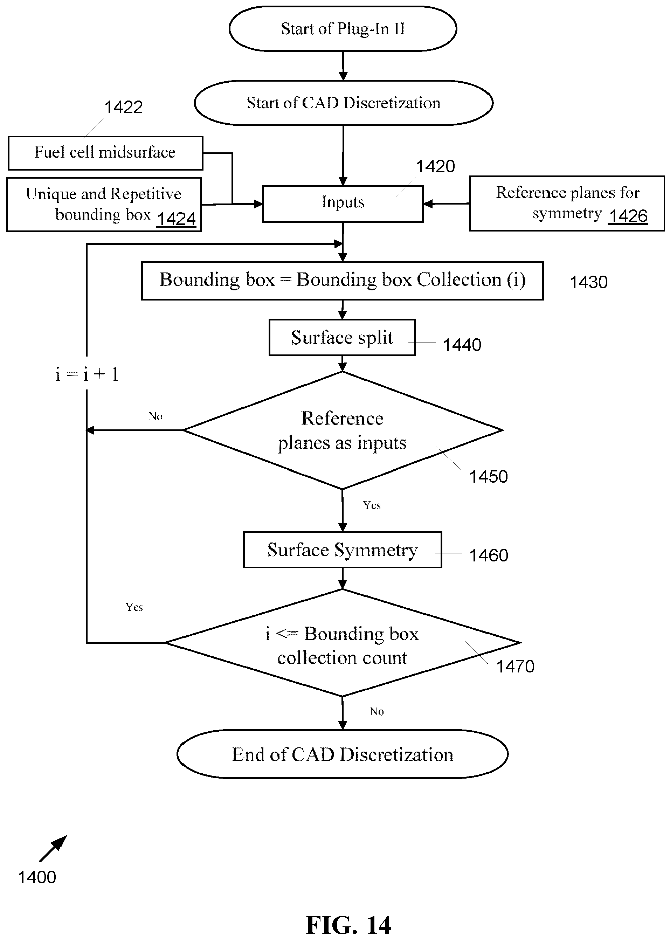

FIG. 14 is a flowchart 1400 illustrating the functional flow in an exemplary embodiment of the CAD discretization performed by the second plug-in first portion 910.

Inputs are received as shown by block 1420. Here, the user provides inputs via the GUI for the plug-in first portion 910, including fuel cell mid surface 1422, definition of unique and repetitive bounding boxes 1424, and/or reference planes for symmetry 1426. For each bounding box (i), as shown by box 1430, a surface split is received, as shown by block 1440. If a reference plane is received as an input for the present bounding box (as shown by block 1450), surface symmetry of the split about that plane is also generated, as shown by block 1460. The process iterates for each bounding box, as shown by block 1470.

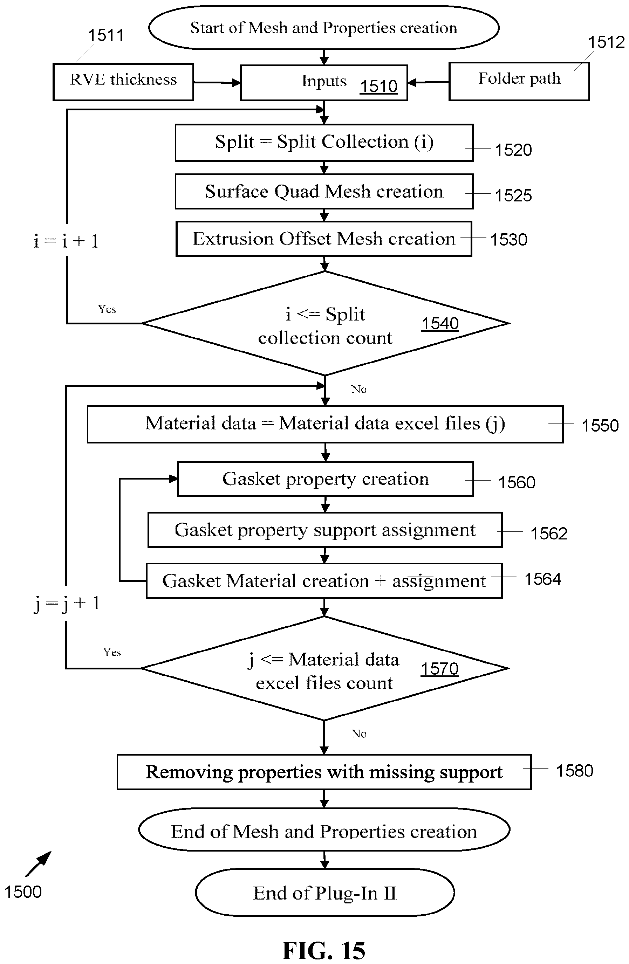

FIG. 15 is a flowchart 1500 illustrating the functional flow in an exemplary embodiment of the CAD discretization performed by the second plug-in second portion 950.

Inputs are received as shown by block 1510. Here, the user provides inputs via the GUI for the plug-in first portion 950, including RVE thickness 1511, and a folder path for an output file. For each split (i), as shown by box 1520, a surface mesh is created as shown by block 111525, and an extrusion offset mesh is created, as shown by block 1530 is received. For each file of material data (for example, Excel data file (j) as shown by block 1550), gasket properties are created (block 1560), gasket property support is assigned (block 1562), and gasket material is created and assigned (block 1564). The process iterates until all material data files have been processed, as shown by block 1570. Any properties with missing support are removed, as shown by block 1580.

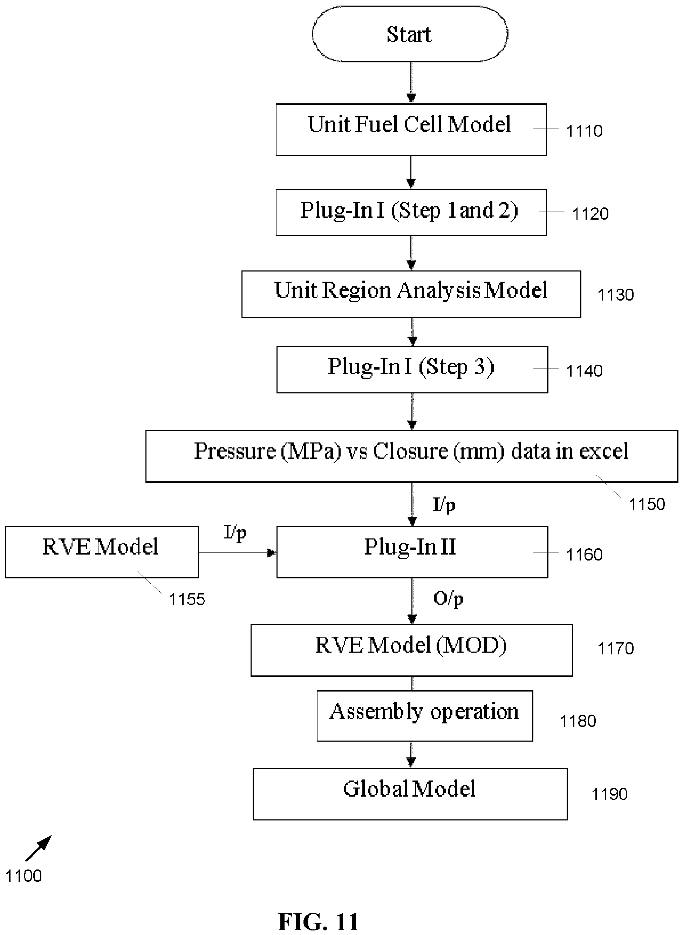

FIG. 11 is a high level flowchart of the process of both the first plug-in (1110-1150) and the second plug-in (1160-1190). It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

As shown by block 1120, steps 1 and 2 of the first plug-in 400 (FIG. 4) discretize the unit fuel cell model (block 1110) into unit regions as per a user specified discretization scheme, create a mesh for the unit region, and create a uniaxial compression analysis case, as shown by block 1130. As shown by block 1140, step 3 receives the unit region analysis model and determines and publishes the output of force vs. displacement of the unit region analysis in a database file and converts the data to pressure vs. closure via the database.

As shown by block 1160, the second plug-in 900 (FIG. 9) receives the pressure vs. closure data and the RVE model 1155 to produce a modified RVE model (1170).

The RVE model input to the second plug-in 900 contains the mid-surface of the fuel cell, the bounding boxes (unique +repetitive) and the planes of symmetry if any. In contrast, the RVE model output by the second plug-in 900 contains the splits of the mid-surface of the fuel cell as per the bounding boxes. These splits are used to create RVE unit cell mesh with section and material properties defined for the RVE elements. The second plug-in performs an assembly operation, as shown by block 1180 to produce a global model of the fuel cell, as shown by block 1190.

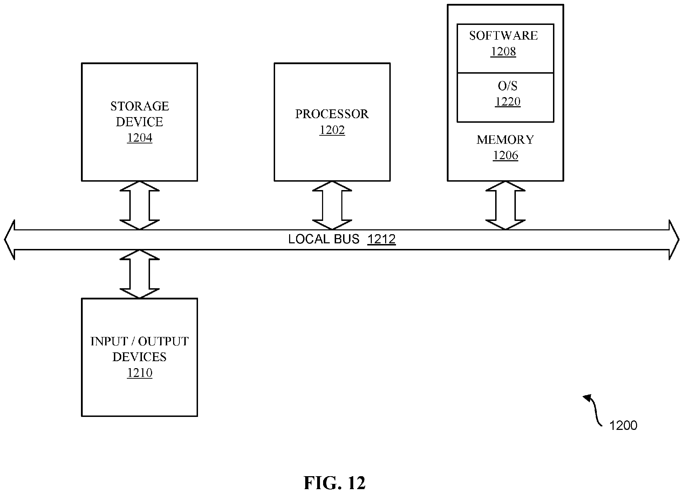

As previously mentioned, the present system for executing the functionality described in detail above may be a computer, an example of which is shown in the schematic diagram of FIG. 12. The system 1200 contains a processor 1202, a storage device 1204, a memory 1206 having software 1208 stored therein that defines the abovementioned functionality, input, and output (I/O) devices 1210 (or peripherals), and a local bus, or local interface 1212 allowing for communication within the system 1200. The local interface 1212 can be, for example but not limited to, one or more buses or other wired or wireless connections, as is known in the art. The local interface 1212 may have additional elements, which are omitted for simplicity, such as controllers, buffers (caches), drivers, repeaters, and receivers, to enable communications. Further, the local interface 1212 may include address, control, and/or data connections to enable appropriate communications among the aforementioned components.

The processor 1202 is a hardware device for executing software, particularly that stored in the memory 1206. The processor 1202 can be any custom made or commercially available single core or multi-core processor, a central processing unit (CPU), an auxiliary processor among several processors associated with the present system 1200, a semiconductor based microprocessor (in the form of a microchip or chip set), a microprocessor, or generally any device for executing software instructions.

The memory 1206 can include any one or combination of volatile memory elements (e.g., random access memory (RAM, such as DRAM, SRAM, SDRAM, *etc.*)) and nonvolatile memory elements (*e.g.,* ROM, hard drive, tape, CDROM, *etc*.)*.* Moreover, the memory 1206 may incorporate electronic, magnetic, optical, and/or other types of storage media. Note that the memory 1206 can have a distributed architecture, where various components are situated remotely from one another, but can be accessed by the processor 1202.

The software 1208 defines functionality performed by the system 1200, in accordance with the present invention. The software 1208 in the memory 1206 may include one or more separate programs, each of which contains an ordered listing of executable instructions for implementing logical functions of the system 1200, as described below. The memory 1206 may contain an operating system (O/S) 1220. The operating system essentially controls the execution of programs within the system 1200 and provides scheduling, input-output control, file and data management, memory management, and communication control and related services.

The I/O devices 1210 may include input devices, for example but not limited to, a keyboard, mouse, scanner, microphone, *etc.* Furthermore, the I/O devices 1210 may also include output devices, for example but not limited to, a printer, display, *etc.* Finally, the I/O devices 1210 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the system 1200 is in operation, the processor 1202 is configured to execute the software 1208 stored within the memory 1206, to communicate data to and from the memory 1206, and to generally control operations of the system 1200 pursuant to the software 1208, as explained above.

When the functionality of the system 1200 is in operation, the processor 1202 is configured to execute the software 1208 stored within the memory 1206, to communicate data to and from the memory 1206, and to generally control operations of the system 1200 pursuant to the software 1208. The operating system 1220 is read by the processor 1202, perhaps buffered within the processor 1202, and then executed.

When the system 1200 is implemented in software 1208, it should be noted that instructions for implementing the system 1200 can be stored on any computer-readable medium for use by or in connection with any computer-related device, system, or method. Such a computer-readable medium may, in some embodiments, correspond to either or both the memory 1206 or the storage device 1204. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 1202 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted, or otherwise processed in a suitable manner if necessary, and then stored in a computer memory.

In an alternative embodiment, where the system 1200 is implemented in hardware, the system 1200 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

The automation of producing an RVE unit region (first embodiment) and incorporating a plurality of RVE unit regions into an FE unit cell (second embodiment) advantageously reduces the scale of computer resources by at least an order of magnitude. Further, the embodiments provide an ergonomic advantage of reducing the number of manual steps required in defining and selecting and the FE unit regions, producing an RVE unit region from each selected FE region, and the incorporation of the plurality of RVE unit regions into the FE unit cell.

It is laborious to manually develop a plurality (n) of unit region models, which are then utilized to create a plurality of analysis cases and require keeping track of 2 x n files. Since the unit cell model must be cut within the bounding box before mesh construction, connection definition, and analysis creation, creating 'n' unit region models has previously been a time-consuming and error-prone job.

The embodiments described above are based on the MSR (Modeling, Simulation and Results) approach. The outputs of the embodiments (plug-ins) concatenate all the data (geometry, FE rep, analysis, and results) in a one single container, namely, a Unit Region Analysis Model, which serves as a single repository for the collective data.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A computer-implemented method for automating generation of a representative volume elements (RVE) unit fuel cell model, comprising the steps of:
- receiving a finite element model (FEM) of a unit cell of a proton exchange membrane fuel cell (PEMFC), wherein the unit cell comprises a first bipolar plate and a second bipolar plate;
- receiving an input identifying a unit region comprising a discretization of the FE unit cell based on at least one of the group consisting of geometric features of the first and/or second bipolar plate of the unit cell, a repeated feature in the geometric features, and a region of symmetry in the geometric features;
- receiving a mesh rule corresponding to the unit region; and
- based on the FE unit region and the mesh rule, generating an RVE unit region corresponding to the FE unit region.

2. The method of claim 1, wherein the RVE unit region corresponds to an FE unit region comprising a portion of a gasket disposed between the first bipolar plate and the second bipolar plate.

3. The method of claim 2, wherein the unit cell further comprises a polymer electrolytic membrane, a gas diffusion layer, a cathode, and an anode.

4. The method of claim 2, further comprising the steps of:
- receiving a scenario definition regarding a clamping force applied to the FE unit cell; and
- based on the scenario definition, generating an RVE unit region scenario.

5. The method of claim 4, wherein the scenario definition further comprises a translation of the first bipolar plate with respect to the second bipolar plate.

6. The method of claim 4, further comprising the step of simulating the gasket behavior of the RVE unit region in the presence of the clamping force.

7. The method of claim 6, further comprising the step of recording the simulation results of the RVE unit region in the presence of the clamping force.

8. The method of claim 6, further comprising the step of determining a material property for a component of the RVE unit region based on the simulating of the gasket behavior of the RVE unit region in the presence of the clamping force.

9. The method of claim 1, further comprising automating generation of a RVE fuel cell global model, comprising the steps of:
- receiving the RVE unit cell model;
- receiving pressure and closure data for the RVE unit cell model;
- receiving surface data for the RVE unit cell model; and
- producing a CAD discretization for the RVE unit cell model,
wherein the RVE unit cell comprises a bounding box.

10. The method of claim 9, further comprising the step of
- receiving reference plane data for the RVE unit cell model;
preferably the step of determining a surface symmetry with respect to the reference plane data.

11. The method of claim 9, wherein the surface data comprises an RVE unit cell mid surface.

12. The method of claim 9, further comprising the step of receiving data indicating the RVE unit cell model is one of the group consisting of a unique bounding box and a repetitive bounding box.

13. The method of claim 9, further comprising the steps of:
- receiving mesh parameters for the RVE fuel cell global model;
- determining a material for the RVE fuel cell global model; and
- producing the RVE fuel cell global model;
preferably further comprising the steps of:
- receiving a material property for a component of an RVE unit region, and assigning a material for a corresponding component of the RVE fuel cell global model.

14. A computer program comprising instructions which, when the program is executed by a computer, cause the computer to perform the method of any of claims 1 to 13.

15. A system comprising a processor coupled to a memory and a graphical user interface, the memory having recorded thereon the computer program of claim 14.
